# EUROPEAN PATENT APPLICATION

(11) **EP 4 553 105 A1**
(43) Date of publication of application: **14.05.2025**
(21) Application number: 23835137.3
(22) Date of filing: 27.04.2023
(51) Int. Cl.: C08J 3/16, B01J 13/02, C08G 73/10, C08J 3/09, C08J 9/28

(54) **METHOD FOR PRODUCING POLYIMIDE HOLLOW PARTICLES AND POLYIMIDE HOLLOW PARTICLES**

(30) Priority: 06.07.2022 JP 2022109178
(71) Applicant: Sekisui Kasei Co., Ltd., Kita-ku Osaka-shi Osaka 530-8565 (JP); National University Corporation Kobe University, Kobe-shi, Hyogo 657-8501 (JP)
(72) Inventor: OUCHI Takuto, Osaka-shi, Osaka 530-8565 (JP); MATSUNO Shinya, Osaka-shi, Osaka 530-8565 (JP); MINAMI Hideto, Kobe-shi, Hyogo 657-8501 (JP); SUZUKI Toyoko, Kobe-shi, Hyogo 657-8501 (JP)
(74) Representative: Hoffmann Eitle
(86) International application number: PCT/JP2023/016722
(87) International publication number: WO 2024/009596

(57) **Abstract**

Provided is a method that is capable of producing polyimide hollow particles and that does not require the use of template particles, does not require conditions of a high temperature and a high pressure, and is capable of producing polyimide hollow particles having excellent heat resistance. In addition, a polyimide hollow particle with excellent heat resistance which is obtained by such a production method is provided.

A production method for polyimide hollow particles according to an embodiment of the present invention is a production method for polyimide hollow particles each having a shell portion and a hollow portion surrounded by the shell portion, the production method including: a step of preparing an inner oil phase containing polyamic acid fine particles and a solvent; a step of preparing an outer oil phase containing a hydrocarbon-based solvent and at least one selected from the group consisting of a compound having a siloxane bond and a silicon dioxide; and a step of carrying out a chemical imidization reaction in an emulsion prepared from the inner oil phase and the outer oil phase.

## Description

### TECHNICAL FIELD

The present invention relates to a production method for polyimide hollow particles and a polyimide hollow particle. More specifically, the present invention relates to a production method for polyimide hollow particles each having a shell portion and a hollow portion surrounded by the shell portion, and such a polyimide hollow particle.

### BACKGROUND ART

Polyimide is a chemically and mechanically stable material having excellent heat resistance, solvent resistance, mechanical properties, electrical insulation, etc. For this reason, polyimide can be used as a coating material for electrical insulation components, a filler for molding, an electrical and electronic material, a substitute for metals and ceramics, a film, a varnish, an adhesive, a bulk molding material, a composite material, etc.

Polyimide particles which are particles into which polyimide is made are given properties derived from the shape and structure of the polyimide, in addition to properties derived from the polyimide. Furthermore, as a means for imparting properties such as lightness and heat insulation to particles, it is known to make the particles into hollow particles. Therefore, if polyimide particles are made into polyimide hollow particles, properties derived from a hollow structure are imparted in addition to the properties derived from polyimide, so that performance improvements in conventional applications and development for new applications are expected.

Patent Literature 1 discloses a method in which a polyamic acid solution obtained by dissolving a polyamic acid in an organic solvent containing at least 50% of an amide-based solvent is injected under specific conditions into a poor solvent containing a polyacrylic acid ester-based polymer surfactant to prepare a dispersion liquid of polyamic acid fine particles, a pyridine/acetic anhydride mixture solution is added to the prepared dispersion liquid of polyamic acid fine particles, chemical imidization is performed to prepare a polyimide fine particle dispersion liquid, the organic solvent and the poor solvent in the prepared polyimide fine particle dispersion liquid are phase-separated, polyimide fine particles are caused to aggregate at the liquid-liquid interface to generate polyimide fine particle aggregates, and the generated polyimide fine particle aggregates are separated and collected, and then dried, whereby polyimide fine particle aggregates are produced.

However, the polyimide fine particle aggregates obtained by the production method described in Patent Literature 1 contain the polyacrylic acid ester-based polymer surfactant having low heat resistance and used as a dispersant, and the use amount of the dispersant is large, so that there is a problem that the heat resistance that can be originally exhibited by polyimide is decreased.

Patent Literature 2 discloses a production method for hollow particles which have a volume average particle diameter of 0.1 µm to 1 mm and in which a shell included in each hollow particle is composed of one or more layers and an outermost layer of the layers is a layer (A) composed of polyimide (a), the production method including the following first step to sixth step.

First step: a step of producing a polyamic acid solution (S1) composed of a polyamic acid and a solvent (s1).

Second step: a step of dispersing fine particles (A1) composed of another material (b) in the polyamic acid solution (S1) to produce a dispersion liquid (D1).

Third step: a step of mixing and stirring the dispersion liquid (D1) and a dispersion liquid (D2) in which hydrophobic fine particles (A2) are dispersed in a solvent (s2) that does not dissolve the polyamic acid and is compatible with the solvent (s1), to produce a dispersion liquid (D3) containing precursor particles (A3) in which the polyamic acid is adsorbed on the surfaces of the fine particles (A1).

Fourth step: a step of separating and extracting the precursor particles (A3) from the dispersion liquid (D3).

Fifth step: a step of dispersing the precursor particles (A3) in a hydrophobic solvent (s3) having an SP value of 7 or less and a boiling point equal to higher than the boiling points of the solvent (s1) and the solvent (s2), and carrying out an imidization reaction at a temperature equal to or higher than the boiling points of the solvent (s1) and the solvent (s2) and equal to or lower than the boiling point of the hydrophobic solvent (s3), to obtain a hydrophobic solvent dispersion liquid (D4) of imidized particles (A4).

Sixth step: a step of separating, washing, and drying the imidized particles (A4) from the hydrophobic solvent dispersion liquid (D4) to obtain the imidized particles (A4), wherein, if the fine particles (A1) composed of the other material (b) are hollow fine particles, the obtained imidized particles (A4) are obtained as the target hollow particles, and if the fine particles (A1) are solid fine particles, the obtained imidized particles (A4) are added to and dispersed in an aqueous medium, and an agent for dissolving or decomposing the other material (b) is further added to remove and wash the material (b) to obtain the target hollow particles.

However, the production method described in Patent Literature 2 is a method for producing hollow particles by a so-called template method, and the particle diameters of the obtained particles depend on the particle diameters of template particles. In addition, the physical properties of the template particles affect the obtained physical properties of the hollow particles when the template particles remain in a hollow portion surrounded by a shell portion, so that there are problems of decreasing the heat resistance that can be originally exhibited by polyimide, etc.

Patent Literature 3 discloses a production method for hollow resin particles each having a resin (A) as a shell, in which a liquid obtained by suspending a solution (E) obtained by dissolving a precursor (A1) of the resin (A) and a phase separation promoter (C) in a volatile solvent (B), in a solvent (D) that does not dissolve the precursor (A1), the resin (A), and the volatile solvent (B) and has a higher boiling point than the volatile solvent (B), is polymerized under pressure to synthesize the resin (A), and then depressurized at a temperature equal to or higher than the boiling point of the volatile solvent (B), and Patent Literature 3 discloses a polyimide resin as one example compound of the resin (A).

However, the production method described in Patent Literature 3 is a production method under harsh conditions of a high temperature and a high pressure, and there are problems such as the need for special production equipment and poor production efficiency due to the time required for heating and cooling or the like.

Patent Literature 4 discloses hollow particles having a volume average particle diameter of 0.1 µm to 1 mm and in which a shell included in each hollow particle is composed of one or more layers and an outermost layer of the layers is a layer (L1) composed of polyimide (a).

However, the production method described in Patent Literature 4 is a method for producing hollow particles by a so-called template method, and the particle diameters of the obtained particles depend on the particle diameters of template particles. In addition, the physical properties of the template particles affect the physical properties of the hollow particles when the template particles remain in a hollow portion surrounded by a shell portion, so that there are problems of decreasing the heat resistance that can be originally exhibited by polyimide, etc.

### CITATION LIST

### Patent Literature

Patent Literature 1: JP 5429922 B2
Patent Literature 2: JP 5133107 B2
Patent Literature 3: JP 4991327 B2
Patent Literature 4: JP 2009-235294 A1

### SUMMARY OF INVENTION

### Technical Problem

The present invention has been made in order to solve the problems of the related art described above, and a primary object of the present invention is to provide a method that is capable of producing polyimide hollow particles and that does not require the use of template particles, does not require conditions of a high temperature and a high pressure, and is capable of producing polyimide hollow particles having excellent heat resistance. Another object of the present invention is to provide a polyimide hollow particle having excellent heat resistance.

### Solution to Problem

[1] A production method for polyimide hollow particles according to an embodiment of the present invention is a production method for polyimide hollow particles each having a shell portion and a hollow portion surrounded by the shell portion, the production method including: a step of preparing an inner oil phase containing polyamic acid fine particles and a solvent; a step of preparing an outer oil phase containing a hydrocarbon-based solvent and at least one selected from the group consisting of a compound having a siloxane bond and a silicon dioxide; and a step of carrying out a chemical imidization reaction in an emulsion prepared from the inner oil phase and the outer oil phase.
[2] In the production method for the polyimide hollow particles according to [1] above, the compound having a siloxane bond may be a polysiloxane.
[3] In the production method for the polyimide hollow particles according to [1] above, the compound having a siloxane bond may have an azo group.
[4] In the production method for the polyimide hollow particles according to [1] above, the silicon dioxide may be a hydrophobic silica particle having a specific surface area of 10 m²/g or more.
[5] In the production method for the polyimide hollow particles according to any one of [1] to [4] above, a reaction temperature of the chemical imidization reaction may be 100°C or lower.
[6] In the production method for the polyimide hollow particles according to any one of [1] to [5] above, the solvent contained in the inner oil phase may be an amide-based solvent.
[7] In the production method for the polyimide hollow particles according to any one of [1] to [6] above, a concentration of the polyamic acid fine particles in the emulsion may be 0.1 wt% or more.
[8] A polyimide hollow particle according to an embodiment of the present invention is a polyimide hollow particle including a shell portion and a hollow portion surrounded by the shell portion, wherein the polyimide hollow particle has a volume average particle diameter of 0.1 µm to 100 µm.
[9] In the polyimide hollow particle according to [8] above, a coefficient of variation (CV value) of a particle diameter of the polyimide hollow particle may be 80% or less.
[10] The polyimide hollow particle according to [8] or [9] above may have a 5% thermal weight loss temperature of 330°C or higher when a temperature of the polyimide hollow particle is increased at a rate of 10°C/min in an air atmosphere.
[11] In the polyimide hollow particle according to any one of [8] to [10] above, when a relative dielectric constant of a film F1 obtained by blending 20 parts by weight of the polyimide hollow particle and 80 parts by weight of polyimide is denoted by Dk1, and a relative dielectric constant of a film F0 composed of only the polyimide is denoted by Dk0, a relative dielectric constant reduction ratio calculated as (Dk1/Dk0) × 100 (%) may be 20% or more.
[12] The polyimide hollow particle according to any one of [8] to [11] above may be a polyimide hollow particle obtained by the production method according to any one of [1] to [7] above.

### Advantageous Effects of Invention

According to the embodiments of the present invention, it is possible to provide a method that is capable of producing polyimide hollow particles and that does not require the use of template particles, does not require conditions of a high temperature and a high pressure, and is capable of producing polyimide hollow particles having excellent heat resistance. In addition, it is possible to provide a polyimide hollow particle having excellent heat resistance.

### BRIEF DESCRIPTION OF THE DRAWINGS

FIG. 1 is a scanning electron microscope photograph of particle cross-sections of polyimide hollow particles (1) obtained in Example 1.
FIG. 2 is a scanning electron microscope photograph of particle cross-sections of polyimide hollow particles (2) obtained in Example 2.
FIG. 3 is a scanning electron microscope photograph of particle cross-sections of polyimide hollow particles (3) obtained in Example 3.
FIG. 4 is a scanning electron microscope photograph of particle cross-sections of polyimide hollow particles (4) obtained in Example 4.
FIG. 5 is a scanning electron microscope photograph of particle cross-sections of polyimide hollow particles (5) obtained in Example 5.
FIG. 6 is a scanning electron microscope photograph of particle cross-sections of polyimide hollow particles (6) obtained in Example 6.
FIG. 7 is a scanning electron microscope photograph of particle cross-sections of polyimide hollow particles (7) obtained in Example 7.
FIG. 8 is a scanning electron microscope photograph of particle cross-sections of polyimide hollow particles (8) obtained in Example 8.
FIG. 9 is a scanning electron microscope photograph of particle cross-sections of polyimide hollow particles (9) obtained in Example 9.
FIG. 10 is a scanning electron microscope photograph of particle cross-sections of polyimide hollow particles (10) obtained in Example 10.

### DESCRIPTION OF EMBODIMENTS

Embodiments of the present invention will be described below, but the present invention is not limited to these embodiments.

### <<<1. Production Method for Polyimide Hollow Particles>>>>

A production method for polyimide hollow particles according to an embodiment of the present invention is a production method for polyimide hollow particles each having a shell portion and a hollow portion surrounded by the shell portion.

The term "hollow" in the present invention means a state where an inside is filled with a substance other than a resin, such as a gas or a liquid, and preferably means a state where the inside is filled with a gas from the standpoint that the effects of the present invention can be exhibited to a greater extent.

The shell portion and the hollow portion surrounded by the shell portion may be composed of one hollow region, or may be composed of a plurality of hollow regions (porous structure).

The production method for polyimide hollow particles according to the embodiment of the present invention includes a step of preparing an inner oil phase containing polyamic acid fine particles and a solvent (hereinafter sometimes referred to as step I for convenience), a step of preparing an outer oil phase containing a hydrocarbon-based solvent and at least one selected from the group consisting of a compound having a siloxane bond and a silicon dioxide (hereinafter sometimes referred to as step II for convenience), and a step of carrying out a chemical imidization reaction in an emulsion prepared from the inner oil phase and the outer oil phase (hereinafter sometimes referred to as step III for convenience).

The production method for polyimide hollow particles according to the embodiment of the present invention may include any appropriate step in addition to the step I, the step II, and the step III, unless the effects of the present invention are impaired.

The production method for polyimide hollow particles according to the embodiment of the present invention is not performed by a so-called template method using template particles, so that there is an advantage that the particle diameters of obtained polyimide hollow particles do not depend on the particle diameters of template particles. In addition, since the production method for polyimide hollow particles according to the embodiment of the present invention is not performed by a so-called template method using template particles, no template particle remains in the hollow portion surrounded by the shell portion, so that there is an advantage that the physical properties of the template particles do not affect the physical properties of the obtained polyimide hollow particles, and in particular, there is an advantage that the heat resistance that can be originally exhibited by polyimide can be sufficiently exhibited.

The production method for polyimide hollow particles according to the embodiment of the present invention does not require conditions of a high temperature and a high pressure, so that there are advantages that special production equipment for reactions at a high temperature and a high pressure is not required and that factors that reduce production efficiency, such as the time required for heating and cooling, are reduced.

### <<1-1. Step I>>

In the step I, an inner oil phase containing polyamic acid fine particles and a solvent is prepared.

The polyamic acid fine particles can be prepared by any appropriate method, unless the effects of the present invention are impaired. An example of such a method is a method in which a solution obtained by dissolving a tetracarboxylic anhydride in a solvent and a solution obtained by dissolving a diamine in a solvent are mixed and reacted.

As the tetracarboxylic anhydride, any appropriate tetracarboxylic anhydride can be used unless the effects of the present invention are impaired. Only one tetracarboxylic anhydride may be used, or two or more tetracarboxylic anhydrides may be used. Examples of such tetracarboxylic anhydrides include: aromatic tetracarboxylic anhydrides such as 3,3',4,4'-benzophenone tetracarboxylic dianhydride (BTDA), 3,3',4,4'-biphenyl tetracarboxylic dianhydride, 2,3,3',4'-biphenyl tetracarboxylic dianhydride, pyromellitic dianhydride, 1,3-bis(2,3-dicarboxyphenoxy)benzene dianhydride, 1,4-bis(2,3-dicarboxyphenoxy)benzene dianhydride, 2,3,3',4'-benzophenone tetracarboxylic dianhydride, 2,2',3,3'-benzophenone tetracarboxylic dianhydride, 2,2',3,3'-biphenyl tetracarboxylic dianhydride, 2,2',6,6'-biphenyl tetracarboxylic dianhydride, naphthalene-1,2,4,5-tetracarboxylic dianhydride, anthracene-2,3,6,7-tetracarboxylic dianhydride, and phenanthrene-1,8,9,10-tetracarboxylic dianhydride; aliphatic tetracarboxylic anhydrides such as butane-1,2,3,4-tetracarboxylic dianhydride; alicyclic tetracarboxylic anhydrides such as cyclobutane-1,2,3,4-tetracarboxylic dianhydride; and heterocyclic tetracarboxylic anhydrides such as pyridine-2,3,5,6-tetracarboxylic anhydride. From the viewpoint of being able to exhibit the effects of the present invention to a greater extent, etc., among these tetracarboxylic anhydrides, 3,3',4,4'-benzophenone tetracarboxylic dianhydride (BTDA) and pyromellitic dianhydride are preferable.

As a tetracarboxylic anhydride, a tetracarboxylic anhydride partially substituted with an acid chloride may be used. If the tetracarboxylic anhydride is partially substituted with an acid chloride, an effect of increasing the reaction rate by a condition, an effect of reducing the particle diameters of the obtained polyamic acid fine particles, etc., are obtained. An example of the acid chloride is diethyl pyromellitate diacyl chloride.

As the solvent for dissolving tetracarboxylic anhydrides, any appropriate solvent can be used unless the effects of the present invention are impaired, and as long as the solvent substantially dissolves tetracarboxylic anhydrides and does not dissolve generated polyamic acid fine particles. Only one such solvent may be used, or two or more such solvents may be used. Examples of such solvents include 2-propanone, 3-pentanone, tetrahydropyrene, epichlorohydrin, acetone, methyl ethyl ketone (MEK), tetrahydrofuran (THF), ethyl acetate, acetanilide, methanol, ethanol, isopropanol, toluene, and xylene. In addition, for example, even if the solvent is a solvent that dissolves polyamic acid fine particles such as amide-based solvents including N,N-dimethylformamide (DMF), N,N-dimethylacetamide (DMAc), N-methyl-2-pyrrolidone (NMP), etc., if the solvent is prepared to be mixed with the above-described poor solvent for polyamic acid fine particles such that polyamic acid fine particles are not dissolved (for example, polyamic acid fine particles precipitate), it is possible to use such a solvent that dissolves polyamic acid fine particles. Moreover, for the purpose of adjusting the molecular weight of the obtained polyamic acid fine particles, etc., water may be used in combination with the above-described solvent, as the solvent for dissolving tetracarboxylic anhydrides.

As the concentration of the tetracarboxylic anhydride in the solution obtained by dissolving the tetracarboxylic anhydride in the solvent, any appropriate concentration can be adopted unless the effects of the present invention are impaired. From the viewpoint of preparing good spherical polyamic acid fine particles, etc., such a concentration is preferably 0.01 wt% to 20 wt%, more preferably 0.1 wt% to 10 wt%, further preferably 0.3 wt% to 7.0 wt%, and particularly preferably 0.5 wt% to 5.0 wt%.

As the diamine, any appropriate diamine can be used unless the effects of the present invention are impaired. Only one diamine may be used, or two or more diamines may be used. Examples of such diamines include: aromatic diamines such as 4,4'-diaminodiphenylmethane (DDM), 4,4'-diaminodiphenyl ether (DPE), 4,4'-bis(4-aminophenoxy)biphenyl (BAPB), 1,4'-bis(4-aminophenoxy)benzene (TPE-Q), 1,3'-bis(4-aminophenoxy)benzene (TPE-R), o-phenylenediamine, m-phenylenediamine, p-phenylenediamine, 3,4'-diaminodiphenyl ether, 4,4'-diaminodiphenyl sulfone, 3,4-diaminodiphenyl sulfone, 3,3'- diaminodiphenyl sulfone, 4,4'-methylene-bis(2-chloroaniline), 3,3'-dimethyl-4,4'-diaminobiphenyl, 4,4'-diaminodiphenyl sulfide, 2,6'-diaminotoluene, 2,4-diaminochlorobenzene, 1,2-diaminoanthraquinone, 1,4-diaminoanthraquinone, 3,3'-diaminobenzophenone, 3,4-diaminobenzophenone, 4,4'-diaminobenzophenone, 4,4'-diaminobibenzyl, R(+)-2,2'-diamino-1,1'-binaphthalene, and S(+)-2,2'-diamino-1,1'-binaphthalene; aliphatic diamines such as 1,2-diaminomethane, 1,4-diaminobutane, tetramethylenediamine, and 1,10-diaminododecane; alicyclic diamines such as 1,4-diaminocyclohexane, 1,2-diaminocyclohexane, bis(4-aminocyclohexyl)methane, and 4,4'-diaminodicyclohexylmethane; 3,4-diaminopyridine; and 1,4-diamino-2-butanone. A blocked diamine may also be used as the diamine. From the viewpoint of being able to exhibit the effects of the present invention to a greater extent, etc., among these diamines, 4,4'-diaminodiphenylmethane (DDM), 4,4'-diaminodiphenyl ether (DPE), and 1,3'-bis(4-aminophenoxy)benzene (TPE-R) are preferable.

For the purpose of denaturing the obtained polyamic acid fine particles, etc., a diamine and another amine-based compound (monoamine compound, polyamine compound, or the like) may be used in combination.

As the solvent for dissolving diamines, any appropriate solvent can be used unless the effects of the present invention are impaired, and as long as the solvent substantially dissolves diamines and does not dissolve generated polyamic acid fine particles. Only one such solvent may be used, or two or more such solvents may be used. Examples of such solvents include 2-propanone, 3-pentanone, tetrahydropyrene, epichlorohydrin, acetone, methyl ethyl ketone (MEK), tetrahydrofuran (THF), ethyl acetate, acetanilide, methanol, ethanol, isopropanol, toluene, and xylene. In addition, for example, even if the solvent is a solvent that dissolves polyamic acid fine particles such as amide-based solvents including N,N-dimethylformamide (DMF), N,N-dimethylacetamide (DMAc), N-methyl-2-pyrrolidone (NMP), etc., if the solvent is prepared to be mixed with the above-described poor solvent for polyamic acid fine particles such that polyamic acid fine particles are not dissolved (for example, polyamic acid fine particles precipitate), it is possible to use such a solvent that dissolves polyamic acid fine particles.

As the concentration of the diamine in the solution obtained by dissolving the diamine in the solvent, any appropriate concentration can be adopted unless the effects of the present invention are impaired. From the viewpoint of preparing good spherical polyamic acid fine particles, etc., such a concentration is preferably 0.01 wt% to 20 wt%, more preferably 0.1 wt% to 10 wt%, further preferably 0.3 wt% to 7.0 wt%, and particularly preferably 0.5 wt% to 5.0 wt%.

As the method in which the solution obtained by dissolving the tetracarboxylic anhydride in the solvent and the solution obtained by dissolving the diamine in the solvent are mixed and reacted, any appropriate method can be adopted unless the effects of the present invention are impaired. From the viewpoint of being able to exhibit the effects of the present invention to a greater extent, etc., the method in which the solution obtained by dissolving the tetracarboxylic anhydride in the solvent and the solution obtained by dissolving the diamine in the solvent are mixed and reacted is more preferably a method with ultrasonic agitation. Ultrasonic agitation makes it possible to reduce the average particle diameter by about 50% compared to normal agitation methods. For ultrasonic agitation, any appropriate ultrasonic device and conditions, such as ultrasonic emulsification machines including ultrasonic homogenizers (e.g., manufactured by Branson, etc.), can be adopted. The frequency of ultrasonic waves may be set as appropriate according to the desired particle diameter, etc., and is usually about 10 kHz to 100 kHz and preferably 15 kHz to 45 kHz.

As the temperature at which the solution obtained by dissolving the tetracarboxylic anhydride in the solvent and the solution obtained by dissolving the diamine in the solvent are mixed and reacted, any appropriate temperature can be adopted unless the effects of the present invention are impaired. From the viewpoint of preparing good spherical polyamic acid fine particles, etc., such a temperature is preferably 0°C to 130°C, more preferably 5°C to 80°C, further preferably 10°C to 50°C, particularly preferably 15°C to 40°C, and most preferably 20°C to 30°C.

As the time for which the solution obtained by dissolving the tetracarboxylic anhydride in the solvent and the solution obtained by dissolving the diamine in the solvent are mixed and reacted, any appropriate time can be adopted unless the effects of the present invention are impaired. From the viewpoint of preparing good spherical polyamic acid fine particles, etc., such a time is preferably 10 seconds to 24 hours, more preferably 10 seconds to 12 hours, further preferably 10 seconds to 6 hours, and particularly preferably 10 seconds to 1 hour.

As the molar ratio between the tetracarboxylic anhydride and the diamine, any appropriate molar ratio can be adopted unless the effects of the present invention are impaired. From the viewpoint of preparing good spherical polyamic acid fine particles, etc., such a molar ratio is preferably 1:0.5 to 1:1.5, more preferably 1:0.8 to 1:1.2, and further preferably 1:0.9 to 1:1.1.

With the method in which the solution obtained by dissolving the tetracarboxylic anhydride in the solvent and the solution obtained by dissolving the diamine in the solvent are mixed and reacted, polyamic acid fine particles typically precipitate as fine particles in the solvent. Therefore, the polyamic acid fine particles that have precipitated in the solvent can be obtained by isolation through solid-liquid separation by any appropriate method, washing by any appropriate method if necessary, and drying by any appropriate method if necessary.

As the method for the solid-liquid separation, any appropriate method can be adopted unless the effects of the present invention are impaired. An example of such a method for the solid-liquid separation is centrifugal separation.

As the solvent to be used to prepare the inner oil phase, any appropriate solvent can be used unless the effects of the present invention are impaired. Only one such solvent may be used, or two or more such solvents may be used. From the viewpoint of being able to exhibit the effects of the present invention to a greater extent, etc., the solvent to be used to prepare the inner oil phase is preferably an amide-based solvent. Examples of the amide-based solvent include N,N-dimethylformamide (DMF), N,N-dimethylacetamide, N-methyl-2-pyrrolidone (NMP), 1,3-dimethyl-2-imidazolidinone, and acetanilide.

The inner oil phase may contain any appropriate other component unless the effects of the present invention are impaired, and as long as the inner oil phase contains the polyamic acid fine particles and the solvent. From the viewpoint of being able to exhibit the effects of the present invention to a greater extent, etc., the total content ratio of the polyamic acid fine particles and the solvent in the inner oil phase is preferably 80 wt% to 100 wt%, more preferably 90 wt% to 100 wt%, further preferably 95 wt% to 100 wt%, and particularly preferably 98 wt% to 100 wt%.

The inner oil phase may also contain, as the above other component, a non-crosslinkable polymer that is at least one selected from the group consisting of a polyolefin, a styrene-based polymer, a (meth)acrylic acid-based polymer, a styrene-(meth)acrylic-based polymer, a polycarbonate, and a styrene-maleic anhydride copolymer. Only one such non-crosslinkable polymer may be used, or two or more such non-crosslinkable polymers may be used.

From the standpoint that the effects of the present invention can be exhibited to a greater extent, the content ratio of the non-crosslinkable polymer in the inner oil phase is preferably 0 wt% to 20 wt%, more preferably 0 wt% to 10 wt%, further preferably 0 wt% to 5 wt%, and particularly preferably 0 wt% to 2 wt%.

From the viewpoint of being able to exhibit the effects of the present invention to a greater extent, etc., the inner oil phase is preferably prepared by dissolving the polyamic acid fine particles in the solvent. In addition, if the inner oil phase contains a non-crosslinkable polymer, the inner oil phase is preferably prepared by dissolving the polyamic acid fine particles and the non-crosslinkable polymer in the solvent.

As the concentration of the polyamic acid fine particles in the inner oil phase, any appropriate concentration can be adopted unless the effects of the present invention are impaired. From the viewpoint of being able to exhibit the effects of the present invention to a greater extent, etc., such a concentration is preferably 0.1 wt% to 50 wt%, more preferably 1 wt% to 40 wt%, further preferably 5 wt% to 35 wt%, and particularly preferably 10 wt% to 30 wt%.

### <<1-2. Step II>>

In the step II, an outer oil phase containing a hydrocarbon-based solvent and at least one selected from the group consisting of a compound having a siloxane bond and a silicon dioxide is prepared. The at least one selected from the group consisting of a compound having a siloxane bond and a silicon dioxide preferably functions as a dispersant. Only one compound having a siloxane bond may be used, or two or more compounds having a siloxane bond may be used. Only one silicon dioxide may be used, or two or more silicon dioxides may be used.

By using at least one selected from the group consisting of a compound having a siloxane bond and a silicon dioxide as a dispersant, the heat resistance that can be originally exhibited by polyimide in the target polyimide fine particles is not decreased, since the heat resistance of the dispersant itself is high unlike polyacrylic acid ester-based polymer surfactants having low heat resistance, etc. Furthermore, if at least one selected from the group consisting of a compound having a siloxane bond and a silicon dioxide is used as a dispersant, a good emulsion can be obtained even if the amount of the dispersant is small, and the chemical imidization reaction for changing the polyamic acid fine particles into polyimide fine particles can be carried out in a system with a relatively high concentration, resulting in excellent production efficiency.

The compound having a siloxane bond is a compound having a Si-O-Si bond, and is preferably a compound having a structure represented by formula (1).

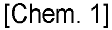

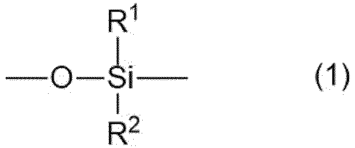

In formula (1), R¹ and R² are the same or different, and are each a hydrogen atom or an alkyl group. From the viewpoint of being able to exhibit the effects of the present invention to a greater extent, etc., the number of carbon atoms of the alkyl group is preferably 1 to 10, more preferably 1 to 6, further preferably 1 to 4, particularly preferably 1 to 2, and most preferably 1. From the viewpoint of being able to exhibit the effects of the present invention to a greater extent, etc., in formula (1), R¹ and R² are each preferably an alkyl group and more preferably a methyl group.

The compound having a siloxane bond is more preferably a compound having a polysiloxane structure in which the structure represented by formula (1) is a repeating unit, and further preferably a compound having a polysiloxane structure (polydimethylsiloxane structure) in which the structure represented by formula (1) (where R¹ is a methyl group and R² is a methyl group) is a repeating unit.

One embodiment of the compound having a siloxane bond is a polysiloxane. By using a polysiloxane, the effects of the present invention can be exhibited to a greater extent. One preferred embodiment of the polysiloxane is a self-emulsified product of a highly polymerized polysiloxane, and an example of a commercially available product thereof is "KM-9787" manufactured by Shin-Etsu Chemical Co., Ltd.

Another embodiment of the compound having a siloxane bond is a compound (A) which is a compound having the structure represented by formula (1) and having an azo group (-N=N-). By using such a compound (A), the effects of the present invention can be exhibited to a greater extent.

From the viewpoint of being able to exhibit the effects of the present invention to a greater extent, etc., the compound (A) has a number average molecular weight Mn of preferably 5000 to 1000000, more preferably 10000 to 800000, further preferably 30000 to 500000, particularly preferably 40000 to 300000, and most preferably 50000 to 200000.

From the viewpoint of being able to exhibit the effects of the present invention to a greater extent, etc., the compound (A) preferably has an amide bond (-NH-CO-). By having an amide bond in addition to an azo group (-N=N-), the effects of the present invention can be exhibited to a greater extent through the electronic and steric effects derived from the azo group and the amide group, etc.

From the viewpoint of being able to exhibit the effects of the present invention to an even greater extent, etc., the compound (A) more preferably has a cyano group. By having an amide bond and a cyano group in addition to an azo group (-N=N-), the effects of the present invention can be exhibited to an even greater extent through the electronic and steric effects derived from the azo group, the amide group, and the cyano group, etc.

From the viewpoint of being able to exhibit the effects of the present invention to a particularly great extent, etc., the compound (A) is a compound having a polydimethylsiloxane structure, an azo group, an amide group, and a cyano group. As such a compound, any appropriate compound can be used unless the effects of the present invention are impaired. Specific examples of such a compound include trade names "VPS-1001" and "VPS-1001 N" manufactured by FUJIFILM Wako Pure Chemical Corporation, which are known as polydimethylsiloxane unit-containing polymeric azopolymerization initiators.

One embodiment of the silicon dioxide is a compound (B) which is a hydrophobic silica particle having a specific surface area of 10 m²/g or more. By using such a compound (B), the effects of the present invention can be exhibited to a greater extent.

From the viewpoint of being able to exhibit the effects of the present invention to a greater extent, etc., the specific surface area of the compound (B) is preferably 10 m²/g to 1000 m²/g, more preferably 30 m²/g to 500 m²/g, and further preferably 50 m²/g to 300 m²/g.

As the compound (B), any appropriate compound can be used unless the effects of the present invention are impaired, and as long as the compound is a hydrophobic silica particle having a specific surface area of 10 m²/g or more. Specific examples of such a compound include trade names "AEROSIL R972", "AEROSIL R972CF", "AEROSIL R972V", "AEROSIL R974", "AEROSIL R976", "AEROSIL R976S", and "AEROSIL R9200" manufactured by NIPPON AEROSIL CO., LTD.

As the hydrocarbon-based solvent, any appropriate hydrocarbon-based solvent can be used unless the effects of the present invention are impaired. Only one such hydrocarbon-based solvent may be used, or two or more such hydrocarbon-based solvents may be used. Examples of such hydrocarbon-based solvents include pentane, hexane, cyclohexane, heptane, octane, benzene, toluene, xylene, and ethylbenzene.

The outer oil phase may contain any appropriate other component unless the effects of the present invention are impaired, and as long as the outer oil phase contains the hydrocarbon-based solvent and the at least one selected from the group consisting of a compound having a siloxane bond and a silicon dioxide. From the viewpoint of being able to exhibit the effects of the present invention to a greater extent, etc., the total content ratio of the hydrocarbon-based solvent and the at least one selected from the group consisting of a compound having a siloxane bond and a silicon dioxide, in the outer oil phase, is preferably 80 wt% to 100 wt%, more preferably 90 wt% to 100 wt%, further preferably 95 wt% to 100 wt%, particularly preferably 98 wt% to 100 wt%, and most preferably substantially 100 wt%. The phrase "substantially 100 wt%" means that there are no other intentionally blended components but the presence of very small amounts (e.g., less than 1 wt%) of impurities that do not affect the effects of the present invention can be included.

From the viewpoint of being able to exhibit the effects of the present invention to a greater extent, etc., the outer oil phase is preferably prepared by dissolving the at least one selected from the group consisting of a compound having a siloxane bond and the silicon dioxide in the hydrocarbon-based solvent.

As the concentration of the at least one selected from the group consisting of a compound having a siloxane bond and a silicon dioxide in the outer oil phase, any appropriate concentration can be adopted unless the effects of the present invention are impaired. From the viewpoint of being able to exhibit the effects of the present invention to a greater extent, etc., such a concentration is preferably 0.001 wt% to 10 wt%, more preferably 0.005 wt% to 5.0 wt%, and further preferably 0.01 wt% to 3.0 wt%.

### <<1-3. Step III>>

In the step III, a chemical imidization reaction is carried out in an emulsion prepared from the inner oil phase prepared in the step I and the outer oil phase prepared in the step II.

In the step III, preferably, an emulsion is prepared from the inner oil phase and the outer oil phase, and a chemical imidization reaction is carried out by adding a chemical imidization agent to the emulsion.

The inner oil phase and the outer oil phase are typically mixed by adding the inner oil phase to the outer oil phase.

From the viewpoint of being able to exhibit the effects of the present invention to a greater extent, etc., the mixing ratio between the inner oil phase and the outer oil phase is preferably 1:10 to 1:500, more preferably 1:30 to 1:300, and further preferably 1:50 to 1:100 as inner oil phase : outer oil phase in terms of weight ratio.

As a method for preparing an emulsion from the inner oil phase and the outer oil phase, any appropriate method can be adopted unless the effects of the present invention are impaired. From the viewpoint of being able to exhibit the effects of the present invention to a greater extent, etc., as the method for preparing an emulsion from the inner oil phase and the outer oil phase, preferably, the inner oil phase is added to the outer oil phase, and emulsification is performed using an emulsifying machine or a dispersing machine. Examples of the emulsifying machine and the dispersing machine include: batch-type emulsifying machines such as homogenizers (manufactured by IKA, etc.), Polytron homogenizers (manufactured by Central Scientific Commerce, Inc., Kinematica AG, etc.), and the homo mixer MARK II (manufactured by PRIMIX Corporation); continuous-type emulsifying machines such as Ebara Milder (manufactured by EBARA CORPORATION), FILMICS (manufactured by PRIMIX Corporation), colloid mills (manufactured by Shinko Pantech Co., Ltd., etc.), slashers (manufactured by Mitsui Miike Kakoki Co., Ltd., etc.), trigonal wet-type micro pulverizers (manufactured by Mitsui Miike Kakoki Co., Ltd., etc.), Cavitron (manufactured by EUROTECH, etc.), and Fine Flow Mill (manufactured by Pacific Machinery & Engineering Co., Ltd.); high-pressure emulsifying machines such as Microfluidizer (manufactured by Powrex Corporation), Nanomizer (manufactured by Nanomizer Inc.), Nanovater (manufactured by YOSHIDA KIKAI CO.,LTD.), and APV Gaulin (manufactured by Gaulin); membrane emulsifying machines such as membrane emulsifying machines (manufactured by REICA Co., Ltd., etc.); vibration-type emulsifying machines such as VIBRO MIXER (manufactured by REICA Co., Ltd., etc.); and ultrasonic emulsifying machines such as ultrasonic homogenizers (manufactured by Branson, etc.).

When preparing an emulsion from the inner oil phase and the outer oil phase, any appropriate other component can be added unless the effects of the present invention are impaired.

As the concentration of the polyamic acid fine particles in the emulsion prepared from the inner oil phase and the outer oil phase, any appropriate concentration can be adopted unless the effects of the present invention are impaired. From the viewpoint of being able to exhibit the effects of the present invention to a greater extent, etc., the concentration of the polyamic acid fine particles in the emulsion prepared from the inner oil phase and the outer oil phase is preferably 0.1 wt% or more, more preferably 0.15 wt% to 5.0 wt%, and further preferably 0.2 wt% to 1.0 wt%.

As the chemical imidization agent, any appropriate chemical imidization agent can be used unless the effects of the present invention are impaired. Only one chemical imidization agent may be used, or two or more chemical imidization agents may be used. As such chemical imidization agents, for example, pyridine and acetic anhydride are used in combination. From the viewpoint of being able to exhibit the effects of the present invention to a greater extent, etc., the ratio between pyridine and acetic anhydride used in combination is preferably 1:0.1 to 1:10, more preferably 1:0.3 to 1:3, further preferably 1:0.5 to 1:2, and particularly preferably 1:0.8 to 1:1.2 as pyridine : acetic anhydride in terms of weight ratio.

As the use amount of the chemical imidization agent, any appropriate use amount can be adopted unless the effects of the present invention are impaired. From the viewpoint of being able to exhibit the effects of the present invention to a greater extent, etc., the use amount of the chemical imidization agent per 100 parts by weight of the polyamic acid fine particles in the inner oil phase is preferably 50 parts by weight to 1200 parts by weight and more preferably 100 parts by weight to 800 parts by weight.

As the reaction temperature of the chemical imidization reaction, any appropriate reaction temperature can be set as appropriate according to the boiling point of the hydrocarbon-based solvent in the outer oil phase, unless the effects of the present invention are impaired. From the viewpoint of being able to exhibit the effects of the present invention to a greater extent, etc., the reaction temperature of the chemical im idization reaction is preferably 100°C or lower, more preferably 0°C to 90°C, and more preferably 20°C to 80°C.

As the reaction time of the chemical imidization reaction, any appropriate time can be adopted unless the effects of the present invention are impaired. From the viewpoint of being able to exhibit the effects of the present invention to a greater extent, etc., the reaction time of the chemical imidization reaction is preferably 0.1 hours to 50 hours and more preferably 1.0 hour to 24 hours.

By carrying out the chemical imidization reaction, polyimide hollow particles are formed in the reaction solution. The formed polyimide hollow particles can be obtained by isolation through solid-liquid separation by any appropriate method, washing by any appropriate method if necessary, and drying by any appropriate method if necessary.

As the method for the solid-liquid separation, any appropriate method can be adopted unless the effects of the present invention are impaired. An example of such a method for the solid-liquid separation is centrifugal separation.

### <<<<2. Polyimide Hollow Particles>>>>

A polyimide hollow particle according to an embodiment of the present invention has a shell portion and a hollow portion surrounded by the shell portion. As described above, the term "hollow" in the present invention means a state where an inside is filled with a substance other than a resin, such as a gas or a liquid, and preferably means a state where the inside is filled with a gas from the standpoint that the effects of the present invention can be exhibited to a greater extent. In addition, as described above, the shell portion and the hollow portion surrounded by the shell portion may be composed of one hollow region, or may be composed of a plurality of hollow regions (porous structure).

The polyimide hollow particle according to the embodiment of the present invention has a volume average particle diameter of preferably 0.1 µm to 100 µm, more preferably 0.5 µm to 80 µm, and further preferably 1.0 µm to 50 µm. If the volume average particle diameter of the polyimide hollow particle according to the embodiment of the present invention falls outside of the above range and is excessively small, the thickness of the shell portion is relatively small, which may result in a polyimide hollow particle that does not have sufficient strength. If the average particle diameter of the polyimide hollow particle according to the embodiment of the present invention falls outside of the above range and is excessively large, the chemical imidization reaction does not proceed, which may result in a decrease in heat resistance.

The coefficient of variation (CV value) of the particle diameter of the polyimide hollow particle according to the embodiment of the present invention is preferably 80% or less, more preferably 1% to 80%, further preferably 2% to 75%, particularly preferably 3% to 70%, and most preferably 5% to 65%. If the coefficient of variation (CV value) of the particle diameter of the polyimide hollow particle according to the embodiment of the present invention falls within the above range, the effects of the present invention can be exhibited to a greater extent. If the coefficient of variation (CV value) of the particle diameter of the polyimide hollow particle according to the embodiment of the present invention falls outside of the above range and is excessively large, for example, when a resin layer is formed from a resin composition, it may be difficult to form a thin film or variations in thickness may occur due to an increase in the amount of coarse particles. It is more preferable if the coefficient of variation (CV value) of the particle diameter of the polyimide hollow particle according to the embodiment of the present invention is smaller, since the particle diameter is more uniform. However, considering factors such as the practicality of production, the lower limit can be as described above.

The polyimide hollow particle according to the embodiment of the present invention has a 5% thermal weight loss temperature of preferably 330°C or higher, more preferably 350°C or higher, further preferably 370°C or higher, and particularly preferably 400°C or higher, when the temperature of the polyimide hollow particle is increased at a rate of 10°C/min in an air atmosphere. The upper limit of the 5% weight loss temperature is, as a practical matter, preferably 600°C or lower. If the 5% thermal weight loss temperature falls within the above range, the polyimide hollow particle according to the embodiment of the present invention can exhibit excellent heat resistance. If the 5% thermal weight loss temperature falls outside of the above range and is excessively low, for example, when the polyimide hollow particle is kneaded with a thermosetting resin, the polyimide hollow particle may become deformed due to heating for a curing reaction, and an effect of reducing dielectricity and an effect of reducing dielectric loss tangent may be decreased due to loss of the hollow portion.

When the relative dielectric constant of a film F1 obtained by blending 20 parts by weight of the polyimide hollow particle according to the embodiment of the present invention and 80 parts by weight of polyimide is denoted by Dk1, and the relative dielectric constant of a film F0 composed of only the polyimide is denoted by Dk0, a relative dielectric constant reduction ratio calculated as (Dk1/Dk0) × 100 (%) is preferably 10% or more, more preferably 15% or more, further preferably 18% or more, and particularly preferably 20% or more. The upper limit of the relative dielectric constant reduction ratio is, as a practical matter, preferably 50% or less. If the relative dielectric constant reduction ratio falls within the above range, for example, when the polyimide hollow particle according to the embodiment of the present invention is added to a resin, an excellent effect of reducing dielectricity can be exhibited, since the relative dielectric constant of the polyimide hollow particle is low.

When the dielectric loss tangent of the film F1 obtained by blending 20 parts by weight of the polyimide hollow particle according to the embodiment of the present invention and 80 parts by weight of polyimide is denoted by Df1, and the dielectric loss tangent of the film F0 composed of only the polyimide is denoted by Df0, a dielectric loss tangent reduction ratio calculated as (Df1/Df0) × 100 (%) is preferably 4% or more, more preferably 7% or more, further preferably 10% or more, and particularly preferably 12% or more. The upper limit of the dielectric loss tangent reduction ratio is, as a practical matter, preferably 50% or less. If the dielectric loss tangent reduction ratio falls within the above range, for example, when the polyimide hollow particle according to the embodiment of the present invention is added to a resin, an excellent effect of reducing dielectric loss tangent can be exhibited, since the dielectric loss tangent of the polyimide hollow particle is low.

The polyimide hollow particle according to the embodiment of the present invention is preferably obtained by the production method for polyimide hollow particles according to the embodiment of the present invention.

### <<3 Applications of Polyimide Hollow Particle>>

The polyimide hollow particle according to the embodiment of the present invention can be adopted for various applications. From the standpoint that the effects of the present invention can be further utilized, the polyimide hollow particle according to the embodiment of the present invention can be applied to semiconductor components (typically resin compositions for a semiconductor component), paint compositions, cosmetic materials, paper coating compositions, heat-insulating compositions, light-diffusible compositions, light-diffusing films, etc., and is particularly suitable for resin compositions for a semiconductor component and paint compositions.

### <<3-1. Resin Composition for Semiconductor Component>>

The polyimide hollow particle according to the embodiment of the present invention can achieve reductions in dielectricity and dielectric loss tangent, can exhibit excellent heat resistance, and thus is suitable for use for a resin composition for a semiconductor component.

A resin composition for a semiconductor component according to an embodiment of the present invention contains the hollow resin particle according to the embodiment of the present invention.

The semiconductor component means a member that forms a semiconductor, and examples of the semiconductor component include semiconductor packages and semiconductor modules. As used herein, the resin composition for a semiconductor component means a resin composition to be used for a semiconductor component.

A semiconductor package is a package formed using at least one member selected from among a mold resin, an underfill material, a mold underfill material, a die bond material, a prepreg for a semiconductor package substrate, a metal clad laminated plate for a semiconductor package substrate, and a build-up material for a printed circuit board for a semiconductor package, with an IC chip as an essential component.

A semiconductor module is a module formed using at least one member selected from among a prepreg for a printed circuit board, a metal clad laminated plate for a printed circuit board, a build-up material for a printed circuit board, a solder resist material, a coverlay film, an electromagnetic wave shielding film, and an adhesive sheet for a printed circuit board, with a semiconductor package as an essential component.

### <<3-2. Paint Composition>>

The polyimide hollow particle according to the embodiment of the present invention is suitable for use for a paint composition, since excellent appearance can be imparted to a paint film containing the polyimide hollow particle.

A paint composition according to an embodiment of the present invention contains the polyimide hollow particle according to the embodiment of the present invention.

The paint composition according to the embodiment of the present invention preferably contains at least one resin selected from a binder resin and a UV curable resin. Only one binder resin may be used, or two or more binder resins may be used in combination. Only one UV curable resin may be used, or two or more UV curable resins may be used in combination.

As the binder resin, any appropriate binder resin can be adopted unless the effects of the present invention are impaired. Examples of such a binder resin include resins that are soluble in organic solvents or water, and emulsion-type aqueous resins that can be dispersed in water. Specific examples of the binder resin include acrylic resins, alkyd resins, polyester resins, polyurethane resins, chlorinated polyolefin resins, and amorphous polyolefin resins.

As the UV curable resin, any appropriate UV curable resin can be adopted unless the effects of the present invention are impaired. Examples of such a UV curable resin include multifunctional (meth)acrylate resins and multifunctional urethane acrylate resins, multifunctional (meth)acrylate resins are preferable, and a multifunctional (meth)acrylate resin having three or more (meth)acryloyl groups in one molecule is more preferable. Specific examples of the multifunctional (meth)acrylate resin having three or more (meth)acryloyl groups in one molecule include trimethylolpropane tri(meth)acrylate, trimethylolethane tri(meth)acrylate, 1,2,4-cyclohexane tetra(meth)acrylate, pentaglycerol triacrylate, pentaerythritol tetra(meth)acrylate, pentaerythritol tri(meth)acrylate, dipentaerythritol triacrylate, dipentaerythritol pentaacrylate, dipentaerythritol tetra(meth)acrylate, dipentaerythritol hexa(meth)acrylate, tripentaerythritol triacrylate, and tripentaerythritol hexaacrylate.

In the case where the paint composition according to the embodiment of the present invention contains at least one resin selected from a binder resin and a UV curable resin, any appropriate content ratio can be adopted as the content ratio of the resin, depending on the purpose. Typically, the amount of the hollow resin particle according to the embodiment of the present invention per the total amount of the hollow resin particle according to the embodiment of the present invention and at least one resin selected from a binder resin (in terms of solid content in the case of an emulsion-type aqueous resin) and a UV curable resin, is preferably from 5 wt% to 50 wt%, more preferably from 10 wt% to 50 wt%, and further preferably from 20 wt% to 40 wt%.

In the case where a UV curable resin is used, a photoinitiator is preferably used in combination. As the photoinitiator, any appropriate photoinitiator can be adopted unless the effects of the present invention are impaired. Examples of such a photoinitiator include acetophenones, benzoins, benzophenones, phosphine oxides, ketals, α-hydroxyalkylphenones, α-aminoalkylphenones, anthraquinones, thioxanthones, azo compounds, peroxides (as described in JP 2001-139663 A, etc.), 2,3-dialkyl dione compounds, disulfide compounds, fluoroamine compounds, aromatic sulfonium compounds, onium salts, borate salts, active halogen compounds, and α-acyl oxime esters.

The paint composition according to the embodiment of the present invention may contain a solvent. Only one solvent may be used, or two or more solvents may be used in combination. In the case where the paint composition according to the embodiment of the present invention contains a solvent, any appropriate content ratio can be adopted as the content ratio of the solvent, depending on the purpose.

As the solvent, any appropriate solvent can be adopted unless the effects of the present invention are impaired. Such a solvent is preferably a solvent in which a binder resin or a UV curable resin can be dissolved or dispersed. For an oil-based paint, examples of such a solvent include: hydrocarbon-based solvents such as toluene and xylene; ketone-based solvents such as methyl ethyl ketone and methyl isobutyl ketone; ester-based solvents such as ethyl acetate and butyl acetate; and ether-based solvents such as dioxane, ethylene glycol diethyl ether, and ethylene glycol monobutyl ether. For a water-based paint, examples of such a solvent include water and alcohols.

The paint composition according to the embodiment of the present invention may be diluted in order to adjust the viscosity thereof if necessary. As a diluent, any appropriate diluent can be adopted depending on the purpose. Examples of such a diluent include the above-described solvents. Only one of the diluents may be used, or two or more of the diluents may be used in combination.

The paint composition according to the embodiment of the present invention may contain other components, such as a coating surface modifier, a fluidity modifier, a UV absorber, a light stabilizer, a curing catalyst, a body pigment, a coloring pigment, a metal pigment, a mica powder pigment, and a dye, if necessary.

In the case where the paint composition according to the embodiment of the present invention is used to form a paint film, as a coating method therefor, any appropriate coating method can be adopted depending on the purpose. Examples of such a coating method include a spray coating method, a roll coating method, a brush coating method, a reverse roll coating method, a gravure coating method, a die coating method, and a comma coating method.

In the case where the paint composition according to the embodiment of the present invention is used to form a paint film, as a formation method therefor, any appropriate formation method can be adopted depending on the purpose. An example of such a formation method is a method in which a paint film is formed by coating any coating surface of a base material to create a coating film, drying the coating film, and then curing the coating film if necessary. Examples of the base material include metal, wood, glass, and plastics (PET (polyethylene terephthalate), PC (polycarbonate), acrylic resin, TAC (triacetyl cellulose), etc.).

### EXAMPLES

The present invention will be specifically described below by way of Examples, but the present invention is not limited to these Examples. "Part(s)" means "part(s) by weight" and "%" means "wt%" unless otherwise specified.

### << Measurement of Volume Average Particle Diameter and Coefficient of Variation>>

The volume average particle diameter of particles was measured by the Coulter method as follows.

The volume average particle diameter of the particles was measured by Coulter Multisizer (registered trademark) 3 (measurement apparatus manufactured by Beckman Coulter, Inc.). The measurement was performed using an aperture calibrated according to the Multisizer (registered trademark) 3 user's manual published by Beckman Coulter, Inc. The aperture to be used in the measurement was selected as appropriate according to the size of the particles to be measured, for example, an aperture having a size of 50 µm was selected when the assumed volume average particle diameter of the particles to be measured was not smaller than 1 µm and not larger than 10 µm, an aperture having a size of 100 µm was selected when the assumed volume average particle diameter of the particles to be measured was larger than 10 µm and not larger than 30 µm, an aperture having a size of 280 µm was selected when the assumed volume average particle diameter of the particles was larger than 30 µm and not larger than 90 µm, and an aperture having a size of 400 µm was selected when the assumed volume average particle diameter of the particles was larger 90 µm and not larger than 150 µm. If the measured volume average particle diameter was different from the assumed volume average particle diameter, the aperture was changed to an aperture having an appropriate size, and the measurement was performed again. Current (aperture current) and Gain were set as appropriate according to the selected aperture size. For example, when the aperture having a size of 50 µm was selected, Current (aperture current) was set to -800, and Gain was set to 4. When the aperture having a size of 100 µm was selected, Current (aperture current) was set to -1600, and Gain was set to 2. When the apertures having sizes of 280 µm and 400 µm were selected, Current (aperture current) was set to -3200, and Gain was set to 1.

As a sample for measurement, a dispersion liquid obtained by dispersing 0.1 g of the particles in 10 ml of a 0.1 wt% nonionic surfactant aqueous solution using a touch mixer ("TOUCH MIXER MT-31", manufactured by Yamato Scientific Co., Ltd.) and an ultrasonic cleaner ("ULTRASONIC CLEANER VS-150", manufactured by VELVO-CLEAR) was used. During the measurement, the interior of a beaker was stirred gently enough to prevent air bubbles from being formed, and the measurement was terminated when 100,000 particles were measured. The volume average particle diameter of the particles was defined as the arithmetic mean in a volume-based particle size distribution of the 100,000 particles.

The coefficient of variation (CV value) of the particle diameters of the particles was calculated by the following mathematical expression. Coefficient of variation (CV value) of particle diameters of particles (%) = (standard deviation of volume-based particle size distribution of particles ÷ volume average particle diameter of particles) × 100 (%)

### <<Cross-Section Observation>>

Dried particles were mixed with photo-curable resin "D-800" (manufactured by JEOL Ltd.) and irradiated with ultraviolet light to obtain a cured material. Then, the cured material was cut with nippers, the cross-sectional portion thereof was processed to be smooth using a cutter, and the sample was coated using an "Auto Fine Coater JFC-1300" sputtering apparatus manufactured by JEOL Ltd. Then, the cross section of the sample was photographed using the secondary electron detector of a "SU1510" scanning electron microscope manufactured by Hitachi High-Technologies Corporation.

### <<Measurement of 5% Weight Loss Temperature When Temperature was Increased at Rate of 10°C/min in Air Atmosphere>>

A 5% thermal weight loss temperature was measured using a "NEXTA STA200RV" differential thermogravimetric simultaneous measurement apparatus manufactured by Hitachi High-Tech Science Corporation. The sampling method and temperature conditions were as follows.

On the bottom of a platinum measurement container, 10.5±0.5 mg of a sample was placed without any gaps to prepare a sample for measurement. The 5% thermal weight loss temperature was measured with alumina as a reference material under an air gas flow rate of 200 mL/min. A TG/DTA curve was obtained by increasing the temperature of the sample from 30°C to 800°C at a temperature increasing rate of 10°C/min. From the obtained curve, the temperature at 5% weight loss was calculated using analysis software included in the apparatus, and was used as a 5% thermal weight loss temperature.

### [Production Example 1]: Synthesis of Polyamic Acid Fine Particles A

A first solution was prepared by dissolving 0.64 g of 3,3',4,4'-benzophenone tetracarboxylic dianhydride (BTDA) in 39.4 g of acetone, and a second solution was prepared by dissolving 0.40 g of 4,4'-diaminodiphenyl ether (DPE) in 39.4 g of acetone.

Next, both solutions were mixed at 25°C and irradiated for 5 minutes using an ultrasonic homogenizer to allow a reaction to occur, causing polyamic acid fine particles to precipitate. Then, solid-liquid separation was performed using a centrifuge, a washing step was performed several times with acetone, and drying was performed, to obtain polyamic acid fine particles A.

The obtained particles were observed using a scanning electron microscope, and it was confirmed that the particles were monodispersed spherical particles.

### [Production Example 2]: Synthesis of Polyamic Acid Fine Particles B

A first solution and a second solution were prepared in the same manner as Production Example 1, then 5 g of ion-exchange water was mixed into the first solution, and the first solution was stirred at 25°C for 30 minutes. Next, both solutions were mixed at 25°C and stirred for 10 minutes to allow a reaction to occur, causing polyamic acid fine particles to precipitate. Then, solid-liquid separation was performed using a centrifuge, a washing step was performed several times with acetone, and drying was performed, to obtain polyamic acid fine particles B.

The obtained particles were observed using a scanning electron microscope, and it was confirmed that the particles were monodispersed spherical particles.

### [Example 1]

An inner oil phase was prepared by mixing and dissolving 0.2 g of the polyamic acid fine particles A obtained in Production Example 1 in 0.8 g of N,N-dimethylformamide (DMF) as a solvent.

In addition, an outer oil phase was prepared by mixing and dissolving 0.56 g of an azo group-containing polydimethylsiloxane (trade name "VPS-1001", manufactured by FUJIFILM Wako Pure Chemical Corporation) in 56 g of hexane as a solvent.

The inner oil phase was added to the outer oil phase, and emulsification and dispersion treatment was performed at 3000 rpm for 2 minutes using a Polytron homogenizer PT10-35 (manufactured by Central Scientific Commerce, Inc.). To the obtained emulsion, 0.4 g of acetic anhydride and 0.4 g of pyridine as chemical imidization agents were added, and the emulsion was heated at 60°C for 3 hours while being stirred, to allow a chemical imidization reaction to proceed. Then, the reaction system was cooled to room temperature, and the entire slurry obtained after the reaction was completed was passed through a JIS test sieve (mesh size: 33 µm) (JIS standard number: Z 8801-1: 2019) to remove coarse particles. Then, particles were allowed to settle by centrifugation, the supernatant liquid was removed, and the particles were washed with cyclohexane and 2-propanol and dried to obtain polyimide hollow particles (1).

The volume average particle diameter of the obtained polyimide hollow particles (1) was 20.7 µm. In addition, when particle cross-sections of the obtained polyimide hollow particles (1) were observed using a scanning electron microscope, the presence of a hollow structure having one or more hollow regions covered with a shell was confirmed.

The results are shown in Table 1.

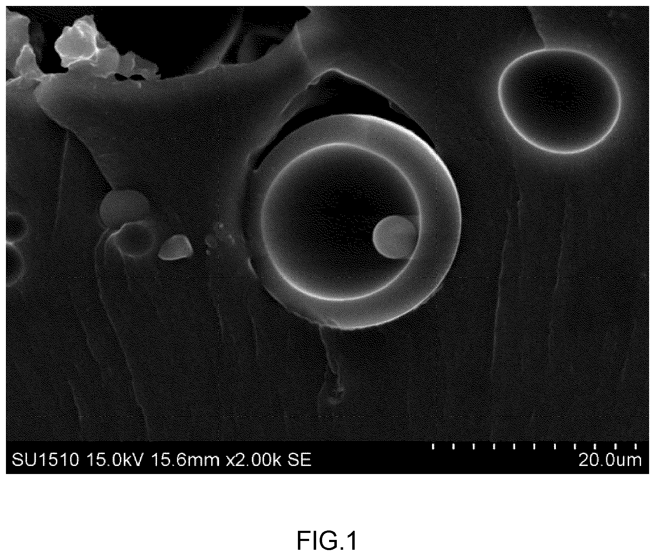

A scanning electron microscope photograph of the particle cross-sections of the obtained polyimide hollow particles (1) is shown in FIG. 1.

### [Example 2]

Polyimide hollow particles (2) were obtained by performing the same operation as in Example 1, except that 66.4 g of cyclohexane was used as the solvent of the outer oil phase.

The volume average particle diameter of the obtained polyimide hollow particles (2) was 19.9 µm. In addition, when particle cross-sections of the obtained polyimide hollow particles (2) were observed using a scanning electron microscope, the presence of a hollow structure having one or more hollow regions covered with a shell was confirmed.

The results are shown in Table 1.

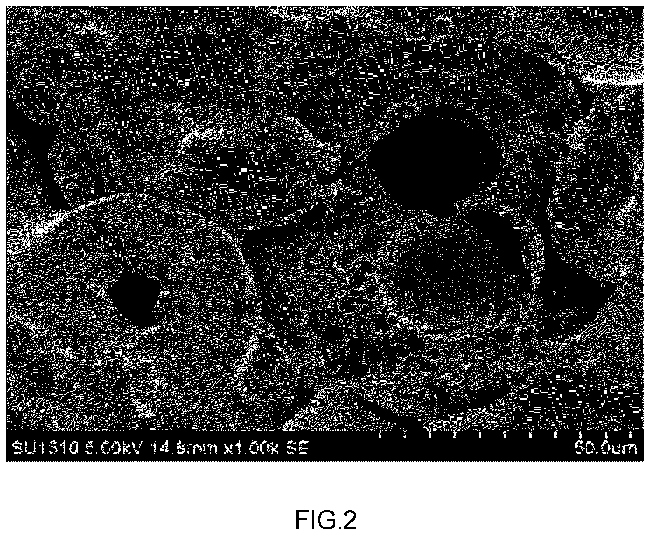

A scanning electron microscope photograph of the particle cross-sections of the obtained polyimide hollow particles (2) is shown in FIG. 2.

### [Example 3]

Polyimide hollow particles (3) were obtained by performing the same operation as in Example 2, except that 0.04 g of hydrophobic silica particles (trade name "AEROSIL (registered trademark) R972", specific surface area = 110±20 m²/g, manufactured by NIPPON AEROSIL CO., LTD.) was used instead of 0.56 g of the azo group-containing polydimethylsiloxane (trade name "VPS-1001", manufactured by FUJIFILM Wako Pure Chemical Corporation).

The volume average particle diameter of the obtained polyimide hollow particles (3) was 19.2 µm. In addition, when particle cross-sections of the obtained polyimide hollow particles (3) were observed using a scanning electron microscope, the presence of a hollow structure having one or more hollow regions covered with a shell was confirmed.

The results are shown in Table 1.

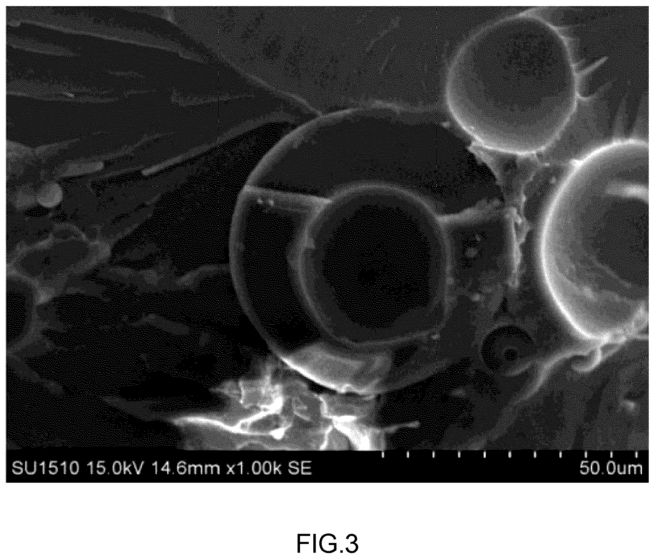

A scanning electron microscope photograph of the particle cross-sections of the obtained polyimide hollow particles (3) is shown in FIG. 3.

### [Example 4]

Polyimide hollow particles (4) were obtained by performing the same operation as in Example 3, except that dimethylacetamide was used as the solvent of the inner oil phase.

The volume average particle diameter of the obtained polyimide hollow particles (4) was 16.3 µm. In addition, when particle cross-sections of the obtained polyimide hollow particles (4) were observed using a scanning electron microscope, the presence of a hollow structure having one or more hollow regions covered with a shell was confirmed.

The results are shown in Table 1.

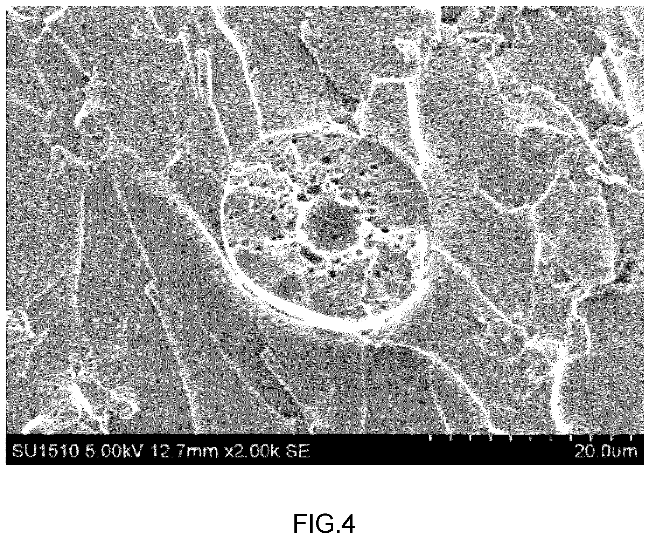

A scanning electron microscope photograph of the particle cross-sections of the obtained polyimide hollow particles (4) is shown in FIG. 4.

### [Example 5]

Polyimide hollow particles (5) were obtained by performing the same operation as in Example 3, except that N-methyl-2-pyrrolidone was used as the solvent of the inner oil phase.

The volume average particle diameter of the obtained polyimide hollow particles (5) was 14.9 µm. In addition, when particle cross-sections of the obtained polyimide hollow particles (5) were observed using a scanning electron microscope, the presence of a hollow structure having one or more hollow regions covered with a shell was confirmed.

The results are shown in Table 1.

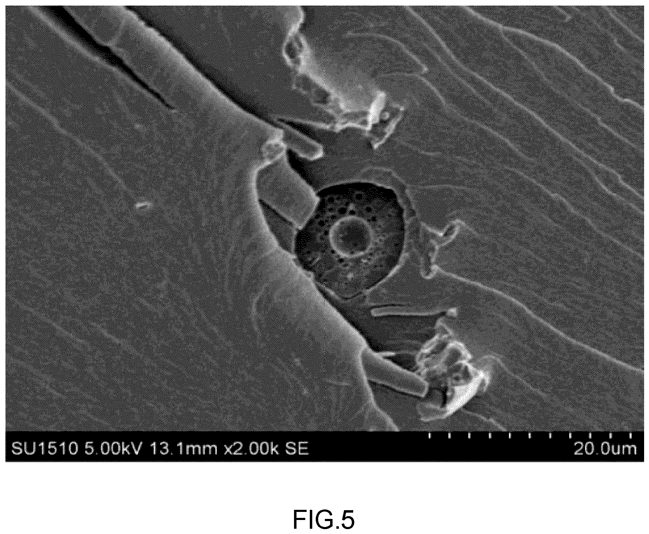

A scanning electron microscope photograph of the particle cross-sections of the obtained polyimide hollow particles (5) is shown in FIG. 5.

### [Example 6]

Polyimide hollow particles (6) were obtained by performing the same operation as in Example 3, except that the reaction conditions after adding the chemical imidization agents were changed to heating at 70°C for 1 hour while stirring.

The volume average particle diameter of the obtained polyimide hollow particles (6) was 14.0 µm. In addition, when particle cross-sections of the obtained polyimide hollow particles (6) were observed using a scanning electron microscope, the presence of a hollow structure having one or more hollow regions covered with a shell was confirmed.

The results are shown in Table 1.

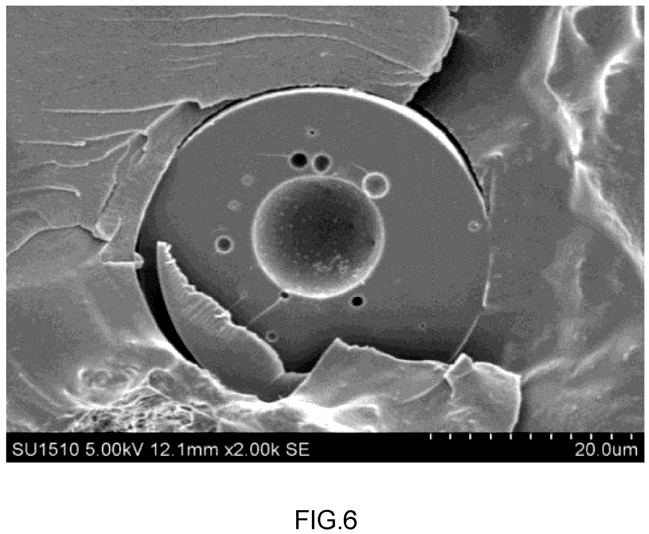

A scanning electron microscope photograph of the particle cross-sections of the obtained polyimide hollow particles (6) is shown in FIG. 6.

### [Example 7]

Polyimide hollow particles (7) were obtained by performing the same operation as in Example 3, except that the polyamic acid fine particles to be used were the polyamic acid fine particles B obtained in Production Example 2.

The volume average particle diameter of the obtained polyimide hollow particles (7) was 14.6 µm. In addition, when particle cross-sections of the obtained polyimide hollow particles (7) were observed using a scanning electron microscope, the presence of a hollow structure having one or more hollow regions covered with a shell was confirmed.

The results are shown in Table 1.

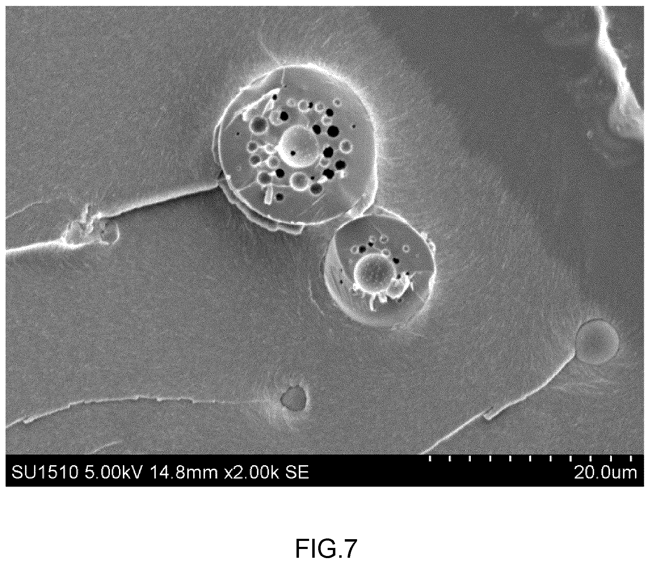

A scanning electron microscope photograph of the particle cross-sections of the obtained polyimide hollow particles (7) is shown in FIG. 7.

### [Example 8]

Polyimide hollow particles (8) were obtained by performing the same operation as in Example 3, except that 0.56 g of a polysiloxane (trade name "KM-9787", manufactured by Shin-Etsu Chemical Co., Ltd.) was used instead of 0.04 g of the hydrophobic silica particles (trade name "AEROSIL (registered trademark) R972", specific surface area = 110±20 m²/g, manufactured by NIPPON AEROSIL CO., LTD.).

The volume average particle diameter of the obtained polyimide hollow particles (8) was 21.2 µm. In addition, when particle cross-sections of the obtained polyimide hollow particles (8) were observed using a scanning electron microscope, the presence of a hollow structure having one or more hollow regions covered with a shell was confirmed.

The results are shown in Table 1.

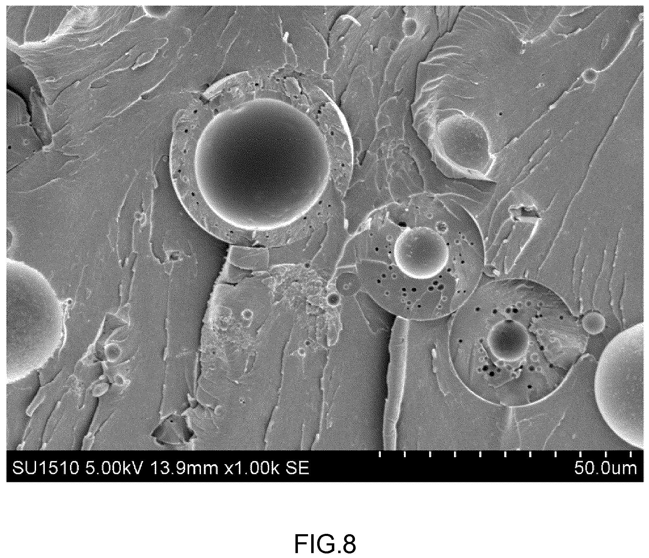

A scanning electron microscope photograph of the particle cross-sections of the obtained polyimide hollow particles (8) is shown in FIG. 8.

### [Example 9]

Polyimide hollow particles (9) were obtained by performing the same operation as in Example 8, except that the polyamic acid fine particles to be used were the polyamic acid fine particles B obtained in Production Example 2.

The volume average particle diameter of the obtained polyimide hollow particles (9) was 19.2 µm. In addition, when particle cross-sections of the obtained polyimide hollow particles (9) were observed using a scanning electron microscope, the presence of a hollow structure having one or more hollow regions covered with a shell was confirmed.

The results are shown in Table 1.

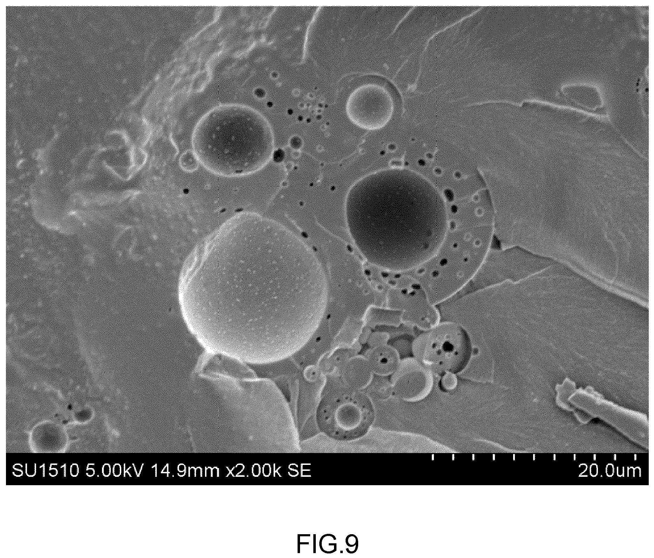

A scanning electron microscope photograph of the particle cross-sections of the obtained polyimide hollow particles (9) is shown in FIG. 9.

### [Example 10]

Polyimide hollow particles (10) were obtained by performing the same operation as in Example 2, except that an inner oil phase was prepared by mixing and dissolving 0.1 g of the polyamic acid fine particles B obtained in Production Example 2 and 0.01 g of polybutyl methacrylate (PBMA) (Mw = 100,000) as another non-crosslinkable polymer in 0.9 g of N,N-dimethylformamide (DMF) as a solvent.

The volume average particle diameter of the obtained polyimide hollow particles (10) was 15.3 µm. In addition, when particle cross-sections of the obtained polyimide hollow particles (10) were observed using a scanning electron microscope, the presence of a hollow structure having one or more hollow regions covered with a shell was confirmed.

The results are shown in Table 1.

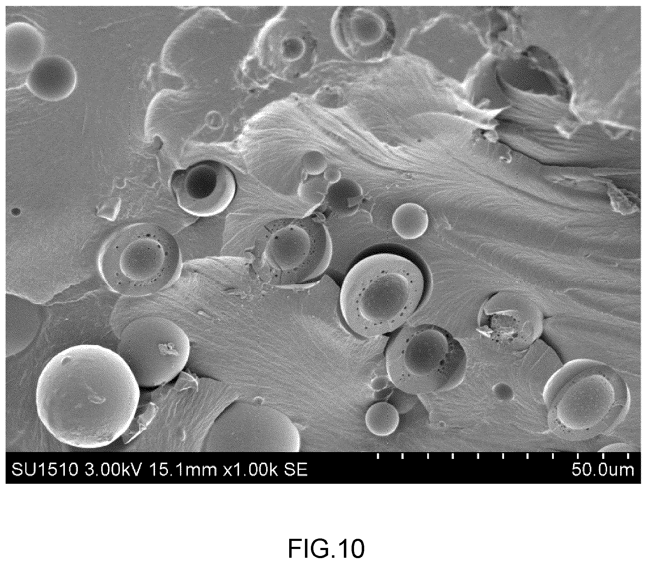

A scanning electron microscope photograph of the particle cross-sections of the obtained polyimide hollow particles (10) is shown in FIG. 10.

### [Comparative Example 1]

Emulsification and dispersion treatment was performed in the same manner as Example 1, except that 0.56 g of an acrylic resin (trade name "Macromonomer AB-6", manufactured by Toagosei Co., Ltd.) was used instead of 0.56 g of the azo group-containing polydimethylsiloxane (trade name "VPS-1001", manufactured by FUJIFILM Wako Pure Chemical Corporation). However, the emulsion stability was extremely low, and coalescence of oil droplets occurred, so that it was not possible to obtain an emulsion.

### [Comparative Example 2]

Emulsification and dispersion treatment was performed in the same manner as Comparative Example 1, except that the polyamic acid fine particles to be used were the polyamic acid fine particles B obtained in Production Example 2. However, the emulsion stability was extremely low, and coalescence of oil droplets occurred, so that it was not possible to obtain an emulsion.

**[Table 1]**

| | | | Ex. 1 | Ex. 2 | Ex. 3 | Ex. 4 | Ex. 5 | Ex. 6 |
|---|---|---|---|---|---|---|---|---|
| Inner oil phase | Polyamic acid fine particles A (g) | | 0.2 | 0.2 | 0.2 | 0.2 | 0.2 | 0.2 |
| | Polyamic acid fine particles B (g) | | - | - | - | - | - | - |
| | PBMA (Mw = 100,000) (g) | | - | - | - | - | - | - |
| | Solvent | N,N-dimethylformamide (g) | 0.8 | 0.8 | 0.8 | - | - | 0.8 |
| | | Dimethylacetamide (g) | - | - | - | 0.8 | - | - |
| | | N-methyl-2-pyrrolidone (g) | - | - | - | - | 0.8 | - |
| Outer oil phase | Solvent | Hexane (g) | 56 | - | - | - | - | - |
| | | Cyclohexane (g) | - | 66.4 | 66.4 | 66.4 | 66.4 | 66.4 |
| | | Heptane (g) | - | - | - | - | - | - |
| | Dispersant | Azo group-containing polydimethylsiloxane (VPS-1001) (g) | 0.56 | 0.56 | - | - | - | - |
| | | Hydrophobic silica particle (AEROSIL R972) (g) | - | - | 0.04 | 0.04 | 0.04 | 0.04 |
| | | Polysiloxane (KM-9787) (g) | - | - | - | - | - | - |
| | | Acrylic resin (Macromonomer AB-6) (g) | - | - | - | - | - | - |
| Chemical imidization | Chemical imidization agent | Acetic anhydride (g) | 0.4 | 0.4 | 0.4 | 0.4 | 0.4 | 0.4 |
| | | Pyridine (g) | 0.4 | 0.4 | 0.4 | 0.4 | 0.4 | 0.4 |
| | Conditions | Reaction temperature (°C) | 60 | 60 | 60 | 60 | 60 | 70 |
| | | Reaction time (h) | 3 | 3 | 3 | 3 | 3 | 1 |
| Concentration of polyamic acid fine particles in emulsion (wt%) | | | 0.347 | 0.294 | 0.297 | 0.297 | 0.297 | 0.297 |
| Particle physical properties | | Volume average particle diameter (µm) | 20.7 | 19.9 | 19.2 | 16.3 | 14.9 | 14.0 |
| | | Coefficient of variation (CV value) of particle diameter (%) | 42.9 | 46.3 | 52.3 | 48.5 | 41.8 | 63.0 |
| | | 5% weight loss temperature (°C) | 416.3 | 417.2 | 470.3 | 421.7 | 434.4 | 462.9 |

**[Table 1] (cont.)**

| | | | Ex. 7 | Ex. 8 | Ex. 9 | Ex. 10 | Comp. Ex. 1 | Comp. Ex. 2 |
|---|---|---|---|---|---|---|---|---|
| Inner oil phase | Polyamic acid fine particles A (g) | | - | 0.2 | - | - | 0.2 | - |
| | Polyamic acid fine particles B (g) | | 0.2 | - | 0.2 | 0.1 | - | 0.2 |
| | PBMA (Mw = 100,000) (g) | | - | - | - | 0.01 | - | - |
| | Solvent | N,N-dimethylformamide (g) | 0.8 | 0.8 | 0.8 | 0.9 | 0.8 | 0.8 |
| | | Dimethylacetamide (g) | - | - | - | - | - | - |
| | | N-methyl-2-pyrrolidone (g) | - | - | - | - | - | - |
| Outer oil phase | Solvent | Hexane (g) | - | - | - | - | 56 | 56 |
| | | Cyclohexane (g) | 66.4 | 66.4 | 66.4 | 66.4 | - | - |
| | | Heptane (g) | - | - | - | - | - | - |
| | Dispersant | Azo group-containing polydimethylsiloxane (VPS-1001) (g) | - | - | - | 0.56 | - | - |
| | | Hydrophobic silica particle (AEROSIL R972) (g) | 0.04 | - | - | - | - | - |
| | | Polysiloxane (KM-9787) (g) | - | 0.56 | 0.56 | - | | |
| | | Acrylic resin (Macromonomer AB-6) (g) | - | - | - | - | 0.56 | 0.56 |
| Chemical imidization | Chemical imidization agent | Acetic anhydride (g) | 0.4 | 0.4 | 0.4 | 0.4 | | |
| | | Pyridine (g) | 0.4 | 0.4 | 0.4 | 0.4 | | |
| | Conditions | Reaction temperature (°C) | 60 | 60 | 60 | 60 | | |
| | | Reaction time (h) | 3 | 3 | 3 | 3 | | |
| Concentration of polyamic acid fine particles in emulsion (wt%) | | | 0.297 | 0.294 | 0.294 | 0.147 | | |
| Particle physical properties | | Volume average particle diameter (µm) | 14.6 | 21.2 | 19.2 | 15.3 | | |
| | | Coefficient of variation (CV value) of particle diameter (%) | 53.7 | 38.7 | 45.3 | 52.1 | | |
| | | 5% weight loss temperature (°C) | 418.8 | 352.0 | 337.3 | 343.4 | | |

### <<Performance Evaluation: Evaluation of Relative Dielectric Constant and Dielectric Loss Tangent>>

0.425 g of collected polyimide hollow particles, 8.3 g of ethyl acetate, and 1.7 g of solvent-soluble polyimide KPI-MX300F (manufactured by Kawamura Sangyo Co., Ltd.) were defoamed and stirred using a planetary stirring defoamer ("Mazerustar KK-250", manufactured by Kurabo Industries Ltd.) to produce a resin composition.

The resin composition was applied to a glass plate having a thickness of 5 mm, using an applicator set to a wet thickness of 250 µm, and then ethyl acetate was removed by heating at 60°C for 30 minutes, at 90°C for 10 minutes, at 150°C for 30 minutes, and at 200°C for 30 minutes, followed by cooling to room temperature. Thus, a film containing the polyimide hollow particles was obtained. The obtained film was evaluated for relative dielectric constant and dielectric loss tangent by a cavity resonance method (measurement frequency: 10 GHz).

Separately, a film containing no polyimide hollow particles (film composed of only polyimide) was similarly evaluated for relative dielectric constant and dielectric loss tangent.

When the relative dielectric constant and the relative dielectric loss tangent of the film containing the polyimide hollow particles obtained above were denoted by Dk1 and Df1, respectively, and the relative dielectric constant and the relative dielectric loss tangent of the film composed of only polyimide were denoted by Dk0 and Df0, respectively, a relative dielectric constant reduction ratio calculated as (Dk1/Dk0) × 100 (%) and a dielectric loss tangent reduction ratio calculated as (Df1/Df0) × 100 (%) were obtained.

The polyimide hollow particles (2), (3), and (7) obtained in Examples 2, 3, and 7 were evaluated.

The results are shown in Table 2.

**[Table 2]**

| | | | |
|---|---|---|---|
| Polyimide hollow particle | (2) | (3) | (7) |
| Film | (2) | (3) | (7) |
| Relative dielectric constant reduction ratio (%) | 20.6 | 23.3 | 23.5 |
| Dielectric loss tangent reduction ratio (%) | 13.7 | 7.4 | 4.2 |

From the results, the polyimide hollow particles provided by the present invention can be confirmed to have the effect of reducing the relative dielectric constant and the dielectric loss tangent of the base material, and thus are found to be effective for the purpose of achieving reductions in dielectric constant and dielectric loss tangent of a semiconductor material.

### INDUSTRIAL APPLICABILITY

The polyimide hollow particle according to the embodiment of the present invention can be adopted for various applications. From the standpoint that the effects of the present invention can be further utilized, the polyimide hollow particle according to the embodiment of the present invention can be applied to semiconductor components (typically resin compositions for a semiconductor component), paint compositions, cosmetic materials, paper coating compositions, heat-insulating compositions, light-diffusible compositions, light-diffusing films, etc., and is particularly suitable for resin compositions for a semiconductor component and paint compositions.

## Claims

1. A production method for polyimide hollow particles each having a shell portion and a hollow portion surrounded by the shell portion, the production method comprising:
a step of preparing an inner oil phase containing polyamic acid fine particles and a solvent;
a step of preparing an outer oil phase containing a hydrocarbon-based solvent and at least one selected from the group consisting of a compound having a siloxane bond and a silicon dioxide; and
a step of carrying out a chemical imidization reaction in an emulsion prepared from the inner oil phase and the outer oil phase.

2. The production method for the polyimide hollow particles according to claim 1, wherein the compound having a siloxane bond is a polysiloxane.

3. The production method for the polyimide hollow particles according to claim 1, wherein the compound having a siloxane bond has an azo group.

4. The production method for the polyimide hollow particles according to claim 1, wherein the silicon dioxide is a hydrophobic silica particle having a specific surface area of 10 m²/g or more.

5. The production method for the polyimide hollow particles according to claim 1, wherein a reaction temperature of the chemical imidization reaction is 100°C or lower.

6. The production method for the polyimide hollow particles according to claim 1, wherein the solvent contained in the inner oil phase is an amide-based solvent.

7. The production method for the polyimide hollow particles according to claim 1, wherein a concentration of the polyamic acid fine particles in the emulsion is 0.1 wt% or more.

8. A polyimide hollow particle comprising a shell portion and a hollow portion surrounded by the shell portion, wherein
the polyimide hollow particle has a volume average particle diameter of 0.1 µm to 100 µm.

9. The polyimide hollow particle according to claim 8, wherein a coefficient of variation (CV value) of a particle diameter of the polyimide hollow particle is 80% or less.

10. The polyimide hollow particle according to claim 8, having a 5% thermal weight loss temperature of 330°C or higher when a temperature of the polyimide hollow particle is increased at a rate of 10°C/min in an air atmosphere.

11. The polyimide hollow particle according to claim 8, wherein, when a relative dielectric constant of a film F1 obtained by blending 20 parts by weight of the polyimide hollow particle and 80 parts by weight of polyimide is denoted by Dk1, and a relative dielectric constant of a film F0 composed of only the polyimide is denoted by Dk0, a relative dielectric constant reduction ratio calculated as (Dk1/Dk0) × 100 (%) is 20% or more.

12. The polyimide hollow particle according to claim 8, obtained by the production method according to any one of claims 1 to 7.
